# EUROPEAN PATENT SPECIFICATION

(11) **EP 2 784 366 B1**
(45) Date of publication and mention of the grant of the patent: **09.03.2016**
(21) Application number: 14161907.2
(22) Date of filing: 27.03.2014
(51) Int. Cl.: F16L 57/04, F16L 57/06

(54) **Pipe for transferring abrasive materials and corresponding method of production**
Rohr zur Übertragung von Scheuermaterialien und entsprechendes Herstellungsverfahren
Tuyau pour transférer des matériaux abrasifs et procédé de fabrication correspondant

(30) Priority: 27.03.2013 IT MI20130467
(43) Date of publication of application: 01.10.2014
(73) Proprietor: Cifa S.P.A., 20030 Senago, Milano (IT)
(72) Inventor: Ferrè, Fabio, 23017 Morbegno (SO) (IT); Mottarella, Domenico, 23013 Cosio Valtellino (SO) (IT); Cortellini, Mauro Marco, 20089 Rozzano (MI) (IT)
(74) Representative: Petraz, Gilberto Luigi

(56) References cited:
- WO-A1-2013/009188
- US-B1- 6 375 228
- US-B2- 7 967 031

## Description

### FIELD OF THE INVENTION

The present invention concerns a pipe for transferring abrasive materials, such as concrete or other abrasive material in a fluid state. In particular, the field of application of the present invention is the building trade, although it remains true that the pipe according to the present invention can also be applied in other industrial sectors.

### BACKGROUND OF THE INVENTION

In the field of building constructions it is known to use pipes that are connected to each other to transfer concrete from a container, for example a mixer truck, to a casting zone, using pumping devices.

Pipes are known that comprise at least an external tubular element and an internal tubular element, that is, disposed inside the external tubular element and made of a material that has a greater resistance to wear than the material that the external tubular element is made of.

The external tubular element has the function of covering the internal tubular element and protecting it from knocks; in order to guarantee great resistance to abrasion, and hence a long working life in efficient conditions, the internal tubular element has great hardness and consequently is not suitable to resist the knocks to which the pipe may be subjected.

Pipes are known in which the internal tubular element is made of heat treated steel, for example quenched, to achieve a hardness near to 65 HRC.

The pipes are provided at their respective ends with flanges, that allow to connect with other pipes, depending on the characteristics of the zone to be reached.

The flanges are usually associated at the ends of the pipes by welding, for example by welding the flanges to the external tubular element.

The welding operations cause a great localized heating of the connection zones that also affects localized zones of the internal tubular element, near the welding zone.

The material of the internal tubular element, in the welding zone and the zones adjacent to it, due to the great heating and subsequent slow cooling, is subjected to a phenomenon of tempering, with a consequent reduction in the hardness of the material, at least in a zone adjacent to welding. When the concrete is transferred, the internal tubular element, in the zone adjacent to welding, is subjected to greater wear, with consequent reduction in the working life of the pipe.

A method is known in which, during welding, the zone of the internal tubular element affected by the heating is uniformly cooled with a cooling liquid in order to preserve its properties of hardness.

In particular, it is provided to insert a feed pipe inside the internal tubular element, which provides to deliver the cooling liquid near the zone affected by welding.

This operation is particularly complex because the inside of the pipe is not always easily accessible, for example in the case of curved pipes, or it is not possible to position the pipe that feeds the liquid precisely inside the pipe, for example to perform welding in intermediate positions of a very long rectilinear pipe. The operation is actually impossible in the case of pipes with curves at both ends.

US 6.375.228 discloses a pipe comprising a number of segments connected to each other by a releasable coupling unit. The coupling unit comprises a unique collar unit secured to the respective ends of the pipes to connect. The coupling unit further includes an encircling clamp unit which engages the respective collar units and rigidly clamps the pipe ends to each other to form a substantially rigid pipe line through the pipe sections. In this document, each pipe section comprises a heat treated inner portion and an encircling outer portion. The collar unit includes an outer sleeve which extends and is telescoped over the end portion of the pipe, with an air gap therebetween. The inner end of the sleeve is secured to the outer wall of the pipe by a weld with the air gap between the sleeve and the pipe. The weld to secure the collar to the external wall of the pipe, with the air gap therebetween, is made prior the heat treatment to harden the inner wall of the pipe. A separate collar is then welded to the sleeve.

US 7.967.031 discloses a pipe for the transport of solids which has a double-layer pipe body and a coupling collar on the inlet-side pipe end and on the outlet-side end. A first wear ring and a second wear ring are provided in succession in the longitudinal direction of the pipe body in the region of the inlet-side coupling collar. The second inner wear ring has a length which is sized greater than or equal to half the internal diameter of the pipe body in order to reduce the wear phenomena in the inlet-side region of the pipe.

One purpose of the present invention is to obtain a pipe for conveying concrete or other abrasive materials in a fluid state, which is reliable, simple, relatively light and economical.

Another purpose of the present invention is to perfect a method for making a pipe of the type indicated above, which is simple and fast.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, a pipe for transferring abrasive materials, such as concrete, according to the present invention, comprises an external tubular body provided with at least a first external tubular portion and a second external tubular portion reciprocally connected, in correspondence to respective ends, with at least a welding bead, and an internal tubular body disposed inside the external tubular body and made of a metal material, heat treated and with a resistance to wear that is greater than that of which the external tubular body is made.

According to one feature of the present invention, the internal tubular body also comprises a first internal tubular portion inserted into the first external tubular portion, and a second internal tubular portion inserted into the second external tubular portion. Between the first internal tubular portion and the second internal tubular portion, in direct correspondence with the position of the welding bead, there is present a tubular interposition element, made of material resistant to heat and resistant to wear.

By heat resistant material we mean that it is able to preserve its mechanical properties, in particular its hardness, even following heating to high temperatures, for example those comparable to welding temperatures that can be comprised between 1400°C and 1600°C.

The heat treatment, such as quenching, to which the first and the second internal tubular portion are subjected, allows to confer adequate resistance to wear when the pipe is used, but an excessive heating would lead it to tempering, thus losing its anti-wear properties.

The interposition tubular element, being made of heat resistant material, maintains its mechanical properties, and in particular its hardness, also following heating due to the making of the welding bead. To provide the interposition element between the first and the second internal tubular portion, distancing the ends from the welding zone, preserves the mechanical properties of the latter and hence their resistance to wear. In this case it is no longer necessary to provide auxiliary cooling devices to be positioned internally near the welding zone between the first and second external tubular portion as provided in the state of the art.

It is therefore possible to obtain, simply and quickly, a pipe without zones of preferred wear, and hence with great and long lasting conditions of efficiency.

The present invention also concerns the corresponding method for making a pipe as described above.

### BRIEF DESCRIPTION OF THE DRAWINGS

These and other characteristics of the present invention will become apparent from the following description of some preferential forms of embodiment, given as a non-restrictive example with reference to the attached drawings wherein:
- fig. 1 is a perspective view of a pipe according to the present invention;
- fig. 2 is a section view of a first detail of fig. 1;
- fig. 3 is a section view of a second detail of fig. 1;
- fig. 4 is a section view of a third detail of fig. 1, according to a variant form of embodiment;
- fig. 5 is a section view of a variant of fig. 4;
- fig. 6 is a section view of a first variant of fig. 3;
- fig. 7 is a section view of a second variant of fig. 3;
- fig. 8 shows a variant of fig. 1.

To facilitate comprehension, the same reference numbers have been used, where possible, to identify identical common elements in the drawings. It is understood that elements and characteristics of one form of embodiment can conveniently be incorporated into other forms of embodiment without further clarifications.

### DETAILED DESCRIPTION OF SOME FORMS OF EMBODIMENT

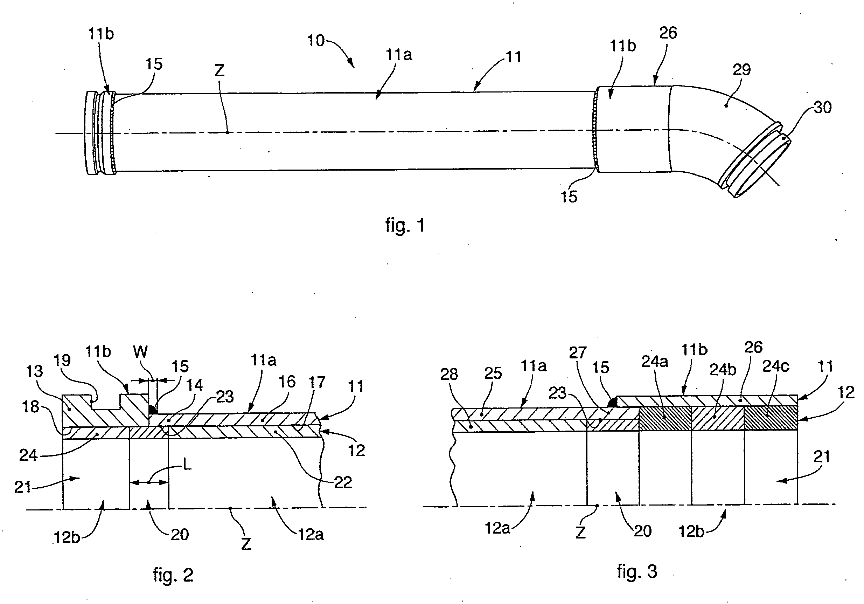

With reference to fig. 1, a pipe 10 for transferring abrasive materials such as concrete, according to the present invention comprises an external tubular body 11 and an internal tubular body 12 disposed inside the external tubular body 11.

The internal tubular body 12 can be in direct contact with the internal surface of the external tubular body 11 or, in other forms of embodiment, it may be provided that there is slight play between them.

The external tubular body 11 and the internal tubular body 12 both have a substantially circular section although, in other forms of embodiment, it may have a polygonal shape, or mixed polygonal-curved.

The external tubular body 11 and the internal tubular body 12 develop along an axis Z, in this case with a rectilinear segment and a curved segment, although it is not excluded that, in other forms of embodiment, they develop along curved axes, or with several curved segments and several rectilinear segments.

The external tubular body 11 is made of a metal material having lower resistance to wear than that which the internal tubular body 12 is made of.

Merely by way of example, the external tubular body 11 is made of a metal material such as steel or aluminum.

The internal tubular body 12 is made of a metal material having great hardness, for example comprised between 60 HRC and 67 HRC.

Merely by way of example, the internal tubular body 12 is made of steels having a carbon content comprised between about 0.30% and about 0.70 %, such as C46, C60 or C65, or alloyed steels such as 45Cr2 or 41CrMo4, or more generally quenched and tempered steels.

The material the internal tubular body 12 is made of is preferably quenched in order to increase its hardness and to make it suitable to resist phenomena of wear.

The external tubular body 11 comprises a first external tubular portion 11 a and a second external tubular portion 11b, disposed aligned along the axis Z and reciprocally coupled by welding, in correspondence with the respective ends, with a welding bead 15.

Some forms of embodiment provide a single welding bead 15 that extends for the entire connection zone between the first external tubular portion 11 a and the second external tubular portion 11b.

Other forms of embodiment can provide several welding beads 15 that extend for only a part of the extension of the connection zone, for example providing a point-by-point welding.

In the form of embodiment shown in fig. 2, the first external tubular portion 11a comprises a first external tubular element 16 with an oblong development, and the second external tubular portion 11b comprises a first flange 13, to connect other pipes.

The first external tubular element 16 and the first flange 13 are provided with respective internal surfaces 17 and respectively 18 which in use can be in contact with the external surface of the internal tubular body 12.

The internal surfaces 17 and 18 respectively of the first external tubular element 16 and the first flange 13 can have substantially the same shape and size, although it is not excluded that, in other forms of embodiment, they can have different shapes and/or sizes.

The first flange 13 is disposed in headwise contact with the first external tubular body 16 in correspondence with a first terminal end 14 of the latter and then welded thereto.

The first flange 13 may be provided with connection means, in this case a circular groove 19, to allow connection with other pipes.

The internal tubular body 12 comprises a first internal tubular portion 12a and a second internal tubular portion 12b, aligned along the axis Z and between which an interposition tubular element 20 is located.

The interposition tubular element 20 is disposed during use inside the external tubular body 11, in direct and longitudinal correspondence with the welding bead 15. By the term "in direct and longitudinal correspondence" we mean that the interposition tubular element 20 affects a zone at least adjacent to the connection zone between the first external tubular portion 11 a and the second external tubular portion 11b. In other words, the interposition tubular element 20 develops longitudinally, in an intermediate position between said first internal tubular portion 12a and said second internal tubular portion 12b, along a zone astride the welding bead 15 that connects the first external tubular portion 11 a and the second external tubular portion 11b.

Merely by way of example it is provided that the interposition tubular element 20 has a length L, assessed along the axis Z, comprised between 3 and 20 times the width W of the welding bead 15.

Together with the first internal tubular portion 12a and the second internal tubular portion 12b, the interposition tubular element 20 defines a passage channel 21 for the abrasive material having a substantially uniform section along the axis Z.

By substantially uniform section along the axis Z we mean that the passage channel 21 does not have any sudden variations in section such as shoulders, sudden variations in diameter, steps or suchlike.

Some forms of embodiment of the present invention can for example provide a passage channel 21 with a section that decreases or widens gradually along the axis Z.

The interposition tubular element 20 is made of a material with a great resistance to wear, for example comparable to or more than that of the internal tubular body 12.

The material the interposition tubular element 20 is made of also has properties of heat resistance.

The material the interposition tubular element 20 is made of can be chosen from a group comprising ceramic material, such as alumina, or carbides, for example chromium carbides, tungsten carbides, cast iron with chromium carbides or possibly techno-polymers, such as polycarbonates, polyesters, suitably loaded with fibers or other.

Since it is positioned substantially in correspondence with the welding bead 15, the interposition tubular element 20, during the welding operations of the first external tubular portion 11 a and the second external tubular portion 11b, maintains its mechanical properties and prevents a localized heating of the first internal tubular portion 12a and therefore a tempering of the latter as described in the state of the art.

In the form of embodiment shown in fig. 2, the first internal tubular portion 12a comprises a first internal tubular element 22 disposed substantially coaxial and in correspondence with, that is, inside, the first external tubular element 16.

More specifically, the first external tubular element 16 protrudes axially with its first end 14 with respect to the terminal end of the first internal tubular element 22; in this way, together with the first internal tubular element 22, it defines a housing seating 23 in which to at least partly dispose the interposition tubular element 20.

The second internal tubular portion 12b comprises in this case a completion tubular element 24 disposed inside the second external tubular portion 11b, in this case inside the first flange 13. The completion tubular element 24 is located adjacent to the interposition tubular element 20 to define, with the latter and with the first internal tubular element 22, the passage channel 21.

The completion tubular element 24 can be made of the same material that the first internal tubular element 22 is made of.

Optionally, the completion tubular element 24 is suitably shaped to define a same-shape coupling with the first flange 13, and to constrain for example the reciprocal positioning of the external tubular body 11 and the internal tubular body 12.

Fig. 3 shows another application of the present invention, for example to a second end 27 of the pipe 10.

In fig. 3 the first external tubular portion 11a of the external tubular body 11 comprises a second external tubular element 25, while the second external tubular portion 11b comprises a sleeve 26.

More specifically, the sleeve 26 is inserted on the external surface of the second external tubular element 25, in correspondence with the second end 27 of the pipe 10, and so as to protrude axially with respect to the second external tubular element 25.

The end of the sleeve 26, overlapping the second external tubular element 25, is welded on the external surface of the second external tubular element 25 by the welding bead 15.

The first internal tubular portion 12a comprises a second internal tubular element 28 which is inserted inside the second external tubular element 25 so that the latter protrudes axially with the second end 27 and in this way defines the housing seating 23 in which to dispose the interposition tubular element 20.

In this case the interposition tubular element 20 has axial sizes such that it does not protrude from the second end 27 of the second external tubular element 25.

In this case too the interposition element 20 is configured so as to be disposed in correspondence with the welding zone between the second external tubular element 25 and the sleeve 26, so as thus to preserve the properties of hardness of the second internal tubular element 28.

In fig. 3, the second internal tubular portion 12b comprises a first completion tubular element 24a disposed in contact with the interposition tubular element 20, a second completion tubular element 24b, and a third completion tubular element 24c, disposed inside the sleeve 26.

The second internal tubular element 28, the interposition tubular element 20 and the first 24a, second 24b and third completion tubular element 24c define the passage channel 21.

The first 24a, second 24b and third completion tubular element 24c can be made of the same material that the second internal tubular element 28 is made of, or a different material, but in any case having anti-wear properties.

At the free end of the sleeve 26 (fig. 1) a segment of curved pipe 29 may be connected, for example by welding, possibly also provided with an external tubular body and an internal tubular body as described above.

A second flange 30 is also associated with the segment of curved pipe 29, to allow connection of the pipe 10 with other pipes.

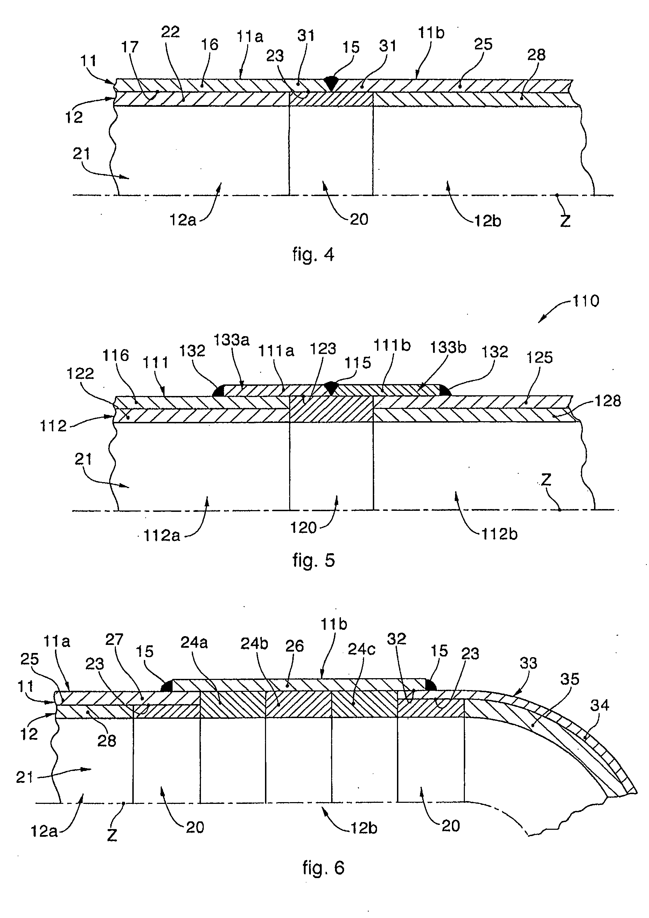

According to other forms of embodiment, which may possibly be combined with other forms of embodiment already described, fig. 4 provides an application of the present invention in an intermediate position of the pipe 10.

In particular, the first external tubular portion 11a comprises a first external tubular element 16, for example the one described with reference to fig. 2, and the second external tubular portion 11b comprises a second external tubular element 25, for example the one described with reference to fig. 3, which are connected headwise, that is, in correspondence with their respective ends, by means of a welding bead 15, to define the external tubular body 11.

The first internal tubular portion 12a instead comprises a first internal tubular element 22, for example the one described with reference to fig. 2, and the second internal tubular portion 12b comprises a second internal tubular element 28, for example the one described with reference to fig. 3.

The first internal tubular element 22 is inserted inside the first external tubular element 16 while the second internal tubular element 28 is inserted in the second external tubular element 25.

In particular, it is provided that the first external tubular element 16 protrudes axially with one end 31 with respect to the first internal tubular element 22, and that the second external tubular element 25 protrudes axially with respect to the second internal tubular element 28, also with an end 31. Consequently, when the first 16 and the second external tubular element 25 are coupled headwise, the housing seating 23 is defined, in which to dispose the interposition tubular element 20.

The interposition tubular element 20 is interposed between the first internal tubular element 22 and the second internal tubular element 28, and in correspondence with the welding zone between the first external tubular element 16 and the second external tubular element 25.

With reference to fig. 5, another form of embodiment of the present invention is described, in which a pipe 110 for transferring concrete comprises an external tubular body 111 in which an internal tubular body 112 is inserted.

The external tubular body 111 comprises a first external tubular element 116 and a second external tubular element 125, with each of which respective sleeves 133a and 133b are solidly associated, for example by means of welding, along respective welding beads 132.

The sleeves 133a and 133b comprise respectively a first external tubular portion 111a and a second external tubular portion 111b which are connected to each other headwise or by partial overlapping of end edges by means of a welding bead 115.

The sleeves 133a and 133b are welded respectively to the first external tubular element 116 and the second external tubular element 125 so as to protrude with respect to the terminal end of the latter in order to define, when coupled, a housing seating 123 in which an interposition tubular element 120 of the type described above is inserted.

The sleeves 133a and 133b are inserted on the external surface of the first external tubular element 116 and the second external tubular element 125 and subsequently welded.

The internal tubular body 112 comprises a first internal tubular portion 112a, in this case a first internal tubular element 122 and a second internal tubular portion 112b, in this case a second internal tubular element 128, inserted respectively in the first external tubular element 116 and the second external tubular element 125. The first internal tubular portion 112a and the second internal tubular portion 112b can have substantially the same conformation and the same properties described for the first internal tubular portion 12a and second internal tubular portion 12b.

The first internal tubular element 122 and the second internal tubular element 128 are disposed in abutment, with their ends, against the interposition tubular element 120, and define with the latter the passage channel 21 for the abrasive material.

Making the pipe 110 provides to weld the sleeves 133a and 133b to the first external tubular element 116 and the second external tubular element 125 and subsequently to insert into the latter two the first internal tubular element 122 and the second internal tubular element 128. It is provided to weld the two sleeves 133a, 133b after inserting the interposition tubular element 120 between them.

With reference to fig. 6, we describe another form of embodiment, for example to integrate the one described with reference to fig. 3, in which a segment of pipe 33, in this case curved, is associated with the external sleeve 26 by means of welding.

In particular, as well as what is described with reference to fig. 3, it is provided that the sleeve 26 protrudes with respect to the third completion tubular element 24c, so as to define a coupling seating 32 for coupling the segment of pipe 33.

The segment of pipe 33 comprises an external tubular element 34 in which an internal tubular element 35 is inserted.

The external tubular element 34 has its end connecting with the sleeve 26 protruding with respect to the internal tubular element 35 to define another housing seating 23 in which to dispose another interposition tubular element 20 of the type described above.

The sleeve 26 is welded by means of a welding bead 15 onto the external surface of the external tubular element 34. The welding bead 15 is made in direct correspondence with the position assumed by the other interposition tubular element 20.

Other forms of embodiment, not shown in the drawings, can provide that, instead of being inserted inside the housing seating 32, the external tubular element 34 is coupled with the sleeve 26 in correspondence with the external surface of the latter.

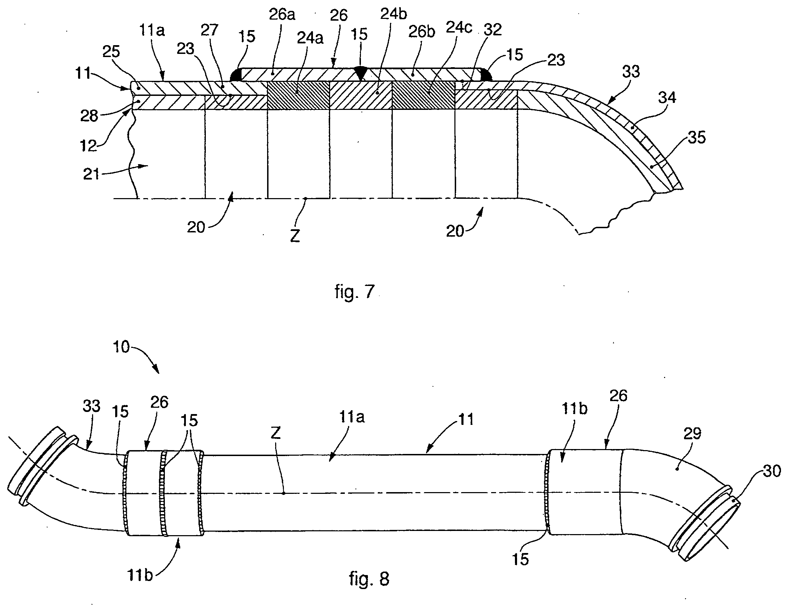

Fig. 7 shows a form of embodiment substantially analogous to the form of embodiment described with reference to fig. 6, in which the sleeve 26 comprises a first part 26a and a second part 26b, reciprocally connected headwise, or possibly by overlapping of the end edges, along another welding bead 15.

The division of the sleeve 26 into the first part 26a and the second part 26b allows to easily insert the interposition tubular elements 20 of the first 24a, the second 24b and the third completion tubular element 24c inside the external tubular body 11.

The first part 26a and the second part 26b of the sleeve 26 are welded with a welding bead 15 which is disposed in direct correspondence with the second completion tubular element 24b which in this case functions as an interposition tubular element.

The method to make a pipe 10 according to the present invention provides to prepare a first external tubular portion 11a, a second external tubular portion 11b, a first internal tubular portion 12a, a second internal tubular portion 12b and an interposition tubular element 20 as described above.

It then provides to insert the first internal tubular portion 12a into the first external tubular portion 11a. This operation may provide a possible heating of the first external tubular portion 11 a, to facilitate the insertion of the first internal tubular portion 12a, and a subsequent cooling during which the first external tubular portion 11 a moves to a condition of interference with the first internal tubular portion 12a, constraining their reciprocal positioning.

Other forms of embodiment may provide to insert the tubular portions 11 a, 12a under pressure.

It is then provided to insert the second internal tubular portion 12b into the second external tubular portion 12a.

Then it is provided to position the interposition tubular element 20 at least partly inside the first external tubular portion 11a, in correspondence with one end of the latter, not occupied by the first internal tubular portion 11a.

The first external portion 11 a is then welded to the second external portion 11b to obtain the welding bead 15.

It is clear that modifications and/or additions of parts may be made to the pipe 10 for transporting concrete and the corresponding method as described heretofore, without departing from the field and scope of the present invention.

For example, in the form of embodiment shown in fig. 8, the pipe 10 differs from the one described with reference to fig. 1 in that the first flange 13 is no longer associated at one end, but a segment of curved pipe, merely by way of example the segment of pipe 33 described with reference to figs. 6 and 7. In this case it may be provided to associate a sleeve 26 with the external tubular body 11, for example in the same way as described in the forms of embodiment in figs. 6 and 7.

With the present invention it is therefore possible to obtain configurations of pipes 10, 110 for transferring abrasive materials also having geometries with multiple curves and that are not easily obtainable with the known methods described above.

It is also clear that, although the present invention has been described with reference to some specific examples, a person of skill in the art shall certainly be able to achieve many other equivalent forms of pipe 10 for transporting concrete and corresponding method, having the characteristics as set forth in the claims and hence all coming within the field of protection defined thereby.

## Claims

1. Pipe for transferring abrasive materials, comprising an external tubular body (11; 111) provided with at least a first external tubular portion (11a; 111a) and a second external tubular portion (11b; 111b) reciprocally connected in correspondence to respective ends by at least one welding bead (15; 115), and an internal tubular body (12; 112) disposed inside said external tubular body (11; 111) and made of a metal material heat-treated and with a resistance to wear that is greater than that of which the external tubular body (11; 111) is made, wherein said internal tubular body (12; 112) comprises a first internal tubular portion (12a; 112a) inserted into said first external tubular portion (11a; 111a), and a second internal tubular portion (12b; 112b) inserted into said second external tubular portion (11b; 111b), **characterized in that** in an intermediate position between said first internal tubular portion (12a; 112a) and said second internal tubular portion (12b; 112b), in longitudinal correspondence with the position of said welding bead (15; 115), a tubular interposition element (20, 120) is provided, made of material resistant to heat and resistant to wear, wherein said tubular interposition element (20, 120) extends longitudinally astride of the welding bead (15; 115) that connects the first external tubular portion (11a; 111a) and the second external tubular portion (11b; 111b).

2. Pipe as in claim 1, **characterized in that**, being W the width of the at least one welding bead (15; 115) along a longitudinal axis (Z) of said pipe, said tubular interposition element (20, 120) has a length, assessed along said axis (Z), comprised between 3 and 20 times the width (W) of the welding bead (15, 115).

3. Pipe as in claim 1 or 2, **characterized in that** said first internal tubular portion (12a; 112a), said second internal tubular portion (12b; 112b) and said tubular interposition element (20; 120) together define a passage channel (21) for said abrasive material with a substantially uniform section along an axis (Z).

4. Pipe as in claim 1 or 2, **characterized in that** at least one of either said first internal tubular portion (12a; 112a) and said second internal tubular portion (12b; 112b) is made of a tempered metal material.

5. Pipe as in any claim hereinbefore, **characterized in that** said tubular interposition element (20; 120) is made of a material chosen from a group comprising ceramic material, carbides or techno-polymers.

6. Pipe as in any claim hereinbefore, **characterized in that** said first external tubular portion (11a) comprises a first external tubular element (16) with an oblong development, and said second external tubular portion (11b) comprises a flange (13), to connect other pipes, welded head-wise to said first external tubular element (16).

7. Pipe as in claim 6, **characterized in that** said first internal tubular portion (12a) comprises a first internal tubular element (22) protruding axially with one of its ends (14) with respect to the terminal end of said first internal tubular element (22) so as to define a housing seating (23) in which said tubular interposition element (20) is at least partly located.

8. Pipe as in any claim from I to 5, **characterized in that** said first external tubular portion (11a) comprises a second external tubular element (25) and said second external tubular portion (11b) comprises a sleeve (26), said sleeve (26) being inserted on the external surface of said second external tubular element (25).

9. Pipe as in claim 8, **characterized in that** the end of said sleeve (26) overlapping said second external tubular element (25) is welded on the external surface of the latter by means of said welding bead (15).

10. Pipe as in claim 9, **characterized in that** the other end of said sleeve (26) is connected, by means of another welding bead (15), to another external tubular element (34), and **in that** another tubular interposition element (20) is inserted into said other external tubular element (34) and is disposed in direct correspondence to said other welding bead (15).

11. Pipe as in claim 10, **characterized in that** said sleeve (26) comprises a first part (26a) and a second part (26b) reciprocally connected along a respective welding bead (15), and **in that** at least a tubular completion element (24a, 24b, 24c) is disposed inside said sleeve (26) and in direct correspondence to said respective welding bead (15).

12. Pipe as in any claim from 1 to 5, **characterized in that** said first external tubular portion (11a) comprises a first external tubular element (16), and the second external tubular portion (11b) comprises a second external tubular element (25) connected head-wise to said first external tubular element (16).

13. Pipe as in any claim from 1 to 5, **characterized in that** said first external tubular portion (111a) and said second external tubular portion (111b) comprise respective sleeves (133a, 133b) each solidly associated with a first external tubular element (116), and respectively with a second external tubular element (125), said tubular interposition element (120) being interposed between said first external tubular element (116) and said second external tubular element (125).

14. Method to make a pipe (10; 110) for transferring abrasive materials comprising the manufacture of an external tubular body (11; 111) which provides to predispose at least a first external tubular portion (11a; 111a) and a second external tubular portion (11b; 111b) to be connected reciprocally in correspondence to respective ends with a welding bead (15; 115), and the manufacture of an internal tubular body (12; 112) to be disposed inside the external tubular body (11; 111) made of a metal material and having a resistance to wear that is greater than that of which the external tubular body (11; 111) is made, wherein the manufacture of said internal tubular body (12; 112) provides to predispose a first internal tubular portion (12a; 112a) to be inserted in said first external tubular portion (11a; 111a), and a second internal tubular portion (12b; 112b) to be inserted in said second external tubular portion (11b; 111b), **characterized in that** before the connection between said first external tubular portion (11a; 111a) and said second external tubular portion (11b; 111b), the method provides to insert a tubular interposition element (20; 120), made of material resistant to heat and resistant to wear, disposing it between said first internal tubular portion (12a; 112a) and said second internal tubular portion (12b; 112b), in correspondence to the position of said welding bead (15; 115), being provided that said tubular interposition element (20) extends longitudinally astride of the welding bead (15; 115) that connects the first external tubular portion (11a; 111a) and the second external tubular portion (11b; 111b).

15. Method as in claim 14, **characterized in that** at least one of either said first internal tubular portion (12a; 112a) and said second internal tubular portion (12b; 112b) is quenched.

## Patentansprüche

1. Rohr zur Übertragung von Schleifstoffen, umfassend einen äußeren Rohrkörper (11; 111), der zumindest mit einem ersten äußeren Rohrabschnitt (11a; 111a) und einem zweiten äußeren Rohrabschnitt (11b; 111b) versehen ist, die an jeweiligen Enden durch zumindest eine Schweißnaht (15; 115) gegenseitig verbunden sind, und einen inneren Rohrkörper (12; 112), der innerhalb des genannten äußeren Rohrkörpers (11; 111) angeordnet ist und aus einem Metallmaterial besteht, der wärmebehandelt ist und eine Verschleißfestigkeit aufweist, die größer als diejenige des Materials ist, aus welchem der äußere Rohrkörper (11; 111) besteht, worin der genannte innere Rohrkörper (12; 112) einen ersten inneren Rohrabschnitt (12a; 112a), der in den genannten ersten äußeren Rohrabschnitt (11a; 111a) eingefügt ist, und einen zweiten inneren Rohrabschnitt (12b; 112b), der in den genannten zweiten äußeren Rohrabschnitt (11b; 111b) eingefügt ist, umfasst, **dadurch gekennzeichnet, dass** in einer Zwischenstellung zwischen dem genannten ersten inneren Rohrabschnitt (12a; 112a) und dem genannten zweiten inneren Rohrabschnitt (12b; 112b), der Länge nach in Übereinstimmung mit der Stellung der genannten Schweißnaht (15; 115), ein rohrförmiges Zwischenteil (20; 120) vorgesehen ist, das aus einem Material besteht, der hitze- und verschleißbeständig ist, worin das genannte rohrförmige Zwischenteil (20; 120) sich längs rittlings der Schweißnaht (15; 115) erstreckt, die den ersten äußeren Rohrabschnitt (11a; 111a) und den zweiten äußeren Rohrabschnitt (11b; 111b) verbindet.

2. Rohr nach Anspruch 1, **dadurch gekennzeichnet, dass**, wobei W die Breite der zumindest einen Schweißnaht (15; 115) entlang einer Längsachse (Z) des genannten Rohrs ist, das genannte rohrförmige Zwischenteil (20; 120) eine Länge, entlang der genannten Achse (Z) beurteilt, aufweist, die zwischen 3- und 20-mal die Breite (W) der Schweißnaht (15; 115) liegt.

3. Rohr nach Anspruch 1 oder 2, **dadurch gekennzeichnet, dass** der genannte erste innere Rohrabschnitt (12a; 112a), der genannte zweite innere Rohrabschnitt (12b; 112b) und das genannte rohrförmige Zwischenteil (20; 120) zusammen einen Durchgangskanal (21), mit einem im Wesentlichen gleichmäßigen Schnitt entlang einer Achse (Z), für die genannten Schleifstoffe definieren.

4. Rohr nach Anspruch 1 oder 2, **dadurch gekennzeichnet, dass** zumindest einer entweder von dem genannten ersten inneren Rohrabschnitt (12a; 112a) oder von dem genannten zweiten inneren Rohrabschnitt (12b; 112b) aus einem gehärteten Metallmaterial besteht.

5. Rohr nach einem der vorhergehenden Ansprüche, **dadurch gekennzeichnet, dass** das genannte rohrförmige Zwischenteil (20; 120) aus einem Material besteht, das aus einer Gruppe gewählt ist, die keramische Werkstoffe, Carbide oder Technopolymere umfasst.

6. Rohr nach einem der vorhergehenden Ansprüche, **dadurch gekennzeichnet, dass** der genannte erste äußere Rohrabschnitt (11a) ein erstes äußeres rohrförmiges Teil (16) mit länglichem Verlauf umfasst und der genannte zweite äußere Rohrabschnitt (11b) einen Flansch (13) umfasst, um andere Rohre zu verbinden, welcher am genannten ersten äußeren rohrförmigen Teil (16) kopfseitig geschweißt ist.

7. Rohr nach Anspruch 6, **dadurch gekennzeichnet, dass** der genannte erste innere Rohrabschnitt (12a) ein erstes inneres rohrförmiges Teil (22) umfasst, das mit einem seiner Enden (14) im Hinblick auf das Schlussende des ersten inneren rohrförmigen Teils (22) axial hervorsteht, um einen Gehäusesitz (23) zu definieren, in dem das genannte rohrförmige Zwischenteil (20) zumindest teilweise befindlich ist.

8. Rohr nach einem der Ansprüche 1 bis 5, **dadurch gekennzeichnet, dass** der genannte erste äußere Rohrabschnitt (11a) ein zweites äußeres rohrförmiges Teil (25) umfasst und der genannte zweite äußere Rohrabschnitt (11b) eine Hülse (26) umfasst, wobei die genannte Hülse (26) auf der Außenfläche des genannten zweiten äußeren rohrförmigen Teils (25) eingefügt ist.

9. Rohr nach Anspruch 8, **dadurch gekennzeichnet, dass** das Ende der genannten Hülse (26), das das genannte zweite äußere rohrförmige Teil (25) überlappt, auf der Außenfläche des letztgenannten Teils (25) durch die genannte Schweißnaht (15) geschweißt ist.

10. Rohr nach Anspruch 9, **dadurch gekennzeichnet, dass** das andere Ende der genannten Hülse (26), durch eine andere Schweißnaht (15), mit einem anderen äußeren rohrförmigen Teil (34) verbunden ist, und dass ein anderes rohrförmiges Zwischenteil (20) in das genannte andere äußere rohrförmige Teil (34) eingefügt und direkt in Übereinstimmung mit der genannten anderen Schweißnaht (15) angeordnet ist.

11. Rohr nach Anspruch 10, **dadurch gekennzeichnet, dass** die genannte Hülse (26) ein erstes Teil (26a) und ein zweites Teil (26b) umfasst, die entlang einer entsprechenden Schweißnaht (15) gegenseitig verbunden sind, und dass zumindest ein rohrförmiges Abschlussteil (24a, 24b, 24c) innerhalb der genannten Hülse (26) und direkt in Übereinstimmung mit der genannten entsprechenden Schweißnaht (15) angeordnet ist.

12. Rohr nach einem der Ansprüche 1 bis 5, **dadurch gekennzeichnet, dass** der genannte erste äußere Rohrabschnitt (11a) ein erstes äußeres rohrförmiges Teil (16) umfasst und der zweite äußere Rohrabschnitt (11b) ein zweites äußeres rohrförmiges Teil (25) umfasst, das mit dem genannten ersten äußeren rohrförmigen Teil (16) kopfseitig verbunden ist.

13. Rohr nach einem der Ansprüche 1 bis 5, **dadurch gekennzeichnet, dass** der genannte erste äußere Rohrabschnitt (111a) und der genannte zweite äußere Rohrabschnitt (111b) entsprechende Hülsen (133a, 133b) umfassen, die jeweils mit einem ersten äußeren rohrförmigen Teil (116) und mit einem zweiten äußeren rohrförmigen Teil (125) fest verbunden sind, wobei das genannte rohrförmige Zwischenteil (120) zwischen dem genannten ersten äußeren rohrförmigen Teil (116) und dem genannten zweiten äußeren rohrförmigen Teil (125) zwischengeschaltet ist.

14. Verfahren zur Herstellung eines Rohrs (10; 110) zur Übertragung von Schleifstoffen, umfassend die Herstellung eines äußeren Rohrkörpers (11; 111), die das Bereitstellen zumindest eines ersten äußeren Rohrabschnitts (11a; 111a) und eines zweiten äußeren Rohrabschnitts (11b; 111b) vorsieht, die gegenseitig an jeweiligen Enden durch eine Schweißnaht (15; 115) verbunden werden sollen, und die Herstellung eines inneren Rohrkörpers (12; 112), der innerhalb des äußeren Rohrkörpers (11; 111) angeordnet werden soll und aus einem Metallmaterial besteht, der eine Verschleißfestigkeit aufweist, die größer als diejenige des Materials ist, aus welchem der äußere Rohrkörper (11; 111) besteht, worin die Herstellung des genannten inneren Rohrkörpers (12; 112) vorsieht, einen ersten inneren Rohrabschnitt (12a; 112a), der in den genannten ersten äußeren Rohrabschnitt (11a; 111a) eingefügt werden soll, und einen zweiten inneren Rohrabschnitt (12b; 112b), der in den genannten zweiten äußeren Rohrabschnitt (11b; 111b) eingefügt werden soll, bereitzustellen, **dadurch gekennzeichnet, dass**, vor der Verbindung zwischen dem genannten ersten äußeren Rohrabschnitt (11a; 111a) und dem genannten zweiten äußeren Rohrabschnitt (11b; 111b), das Verfahren vorsieht, ein rohrförmiges Zwischenteil (20; 120) einzufügen, das aus einem Material besteht, der hitze- und verschleißbeständig ist, indem das Zwischenteil (20; 120) zwischen dem genannten ersten inneren Rohrabschnitt (12a; 112a) und dem genannten zweiten inneren Rohrabschnitt (12b; 112b), in Übereinstimmung mit der Stellung der genannten Schweißnaht (15; 115), angeordnet wird, wobei es vorgesehen ist, dass das genannte rohrförmige Zwischenteil (20) sich längs rittlings der genannten Schweißnaht (15; 115) erstreckt, die den ersten äußeren Rohrabschnitt (11a; 111a) und den zweiten äußeren Rohrabschnitt (11b; 111b) verbindet.

15. Verfahren nach Anspruch 14, **dadurch gekennzeichnet, dass** zumindest einer entweder von dem genannten ersten inneren Rohrabschnitt (12a; 112a) oder von dem genannten zweiten inneren Rohrabschnitt (12b; 112b) abgeschreckt ist.

## Revendications

1. Tuyau de transfert de matériaux abrasifs, comportant un corps tubulaire externe (11 ; 111) pourvu d'au moins une première portion tubulaire externe (11 a ; 111 a) et d'une seconde portion tubulaire externe (11 b ; 111 b) réciproquement reliées en correspondance avec des extrémités respectives par au moins un cordon de soudure (15 ; 115), et un corps tubulaire interne (12 ; 112) disposé à l'intérieur dudit corps tubulaire externe (11 ; 111) et constitué d'un matériau métallique traité thermiquement et ayant une résistance à l'usure qui est supérieure à celui dont est constitué le corps tubulaire externe (11 ; 111), dans lequel ledit corps tubulaire interne (12 ; 112) comporte une première portion tubulaire interne (12a ; 112a) insérée dans ladite première portion tubulaire externe (11 a, 111 a), et une seconde portion tubulaire interne (12b, 112b) insérée dans ladite seconde portion tubulaire externe (11 b ; 111 b), **caractérisé en ce que** dans une position intermédiaire entre ladite première portion tubulaire interne (12a; 112a) et ladite seconde portion tubulaire interne (12b ; 112b), en correspondance longitudinale avec la position dudit cordon de soudure (15 ; 115), un élément d'interposition tubulaire (20, 120) est prévu, constitué d'un matériau résistant à la chaleur et résistant à l'usure, dans lequel ledit élément d'interposition tubulaire (20, 120) s'étend longitudinalement à califourchon sur le cordon de soudure (15 ; 115) qui raccorde la première portion tubulaire externe (11a ; 111a) et la seconde portion tubulaire externe (11b ; 111b).

2. Tuyau selon la revendication 1, **caractérisé en ce que**, W étant la largeur du au moins un cordon de soudure (15 ; 115) le long d'un axe longitudinal (Z) dudit tuyau, ledit élément d'interposition tubulaire (20, 120) a une longueur, évaluée le long dudit axe (Z), comprise entre 3 et 20 fois la largeur (W) du cordon de soudure (15, 115).

3. Tuyau selon la revendication 1 ou 2, **caractérisé en ce que** ladite première portion tubulaire interne (12a ; 112a), ladite seconde portion tubulaire interne (12b ; 112b) et ledit élément d'interposition tubulaire (20 ; 120) définissent ensemble un canal de passage (21) pour ledit matériau abrasif ayant une section sensiblement uniforme le long d'un axe (Z).

4. Tuyau selon la revendication 1 ou 2, **caractérisé en ce qu'**au moins une portion parmi ladite première portion tubulaire interne (12a; 112a) et ladite seconde portion tubulaire interne (12b ; 112b) est constituée d'un matériau métallique ayant été soumis à un revenu.

5. Tuyau selon l'une quelconque des revendications ci-dessus, **caractérisé en ce que** ledit élément d'interposition tubulaire (20 ; 120) est constitué d'un matériau choisi parmi un groupe comportant une céramique, des carbures ou des techno-polymères.

6. Tuyau selon l'une quelconque des revendications ci-dessus, **caractérisé en ce que** ladite première portion tubulaire externe (11 a) comporte un premier élément tubulaire externe (16) avec un développement oblong, et ladite seconde portion tubulaire externe (11b) comporte une bride (13), pour raccorder d'autres tuyaux, soudés côté tête audit premier élément tubulaire externe (16).

7. Tuyau selon la revendication 6, **caractérisé en ce que** ladite première portion tubulaire interne (12a) comporte un premier élément tubulaire interne (22) faisant axialement saillie avec l'une de ses extrémités (14) par rapport à l'extrémité terminale dudit premier élément tubulaire interne (22) de manière à définir un appui de réception (23) dans lequel ledit élément d'interposition tubulaire (20) est au moins partiellement positionné.

8. Tuyau selon l'une quelconque des revendications 1 à 5, **caractérisé en ce que** ladite première portion tubulaire externe (11a) comporte un second élément tubulaire externe (25) et ladite seconde portion tubulaire externe (11 b) comporte un manchon (26), ledit manchon (26) étant inséré sur la surface externe dudit second élément tubulaire externe (25).

9. Tuyau selon la revendication 8, **caractérisé en ce que** l'extrémité dudit manchon (26) recouvrant ledit second élément tubulaire externe (25) est soudée sur la surface externe de ce dernier au moyen dudit cordon de soudure (15).

10. Tuyau selon la revendication 9, **caractérisé en ce que** l'autre extrémité dudit manchon (26) est raccordée, au moyen d'un autre cordon de soudure (15), à un autre élément tubulaire externe (34), et **en ce qu'**un autre élément d'interposition tubulaire (20) est inséré dans ledit autre élément tubulaire externe (34) et est disposé en correspondance directe avec ledit autre cordon de soudure (15).

11. Tuyau selon la revendication 10, **caractérisé en ce que** ledit manchon (26) comporte une première partie (26a) et une seconde partie (26b) réciproquement reliées le long d'un cordon de soudure (15) respectif, et **en ce qu'**au moins un élément de finition tubulaire (24a, 24b, 24c) est disposé à l'intérieur dudit manchon (26) et en correspondance directe avec ledit cordon de soudure (15) respectif.

12. Tuyau selon l'une quelconque des revendications 1 à 5, **caractérisé en ce que** ladite première portion tubulaire externe (11a) comporte un premier élément tubulaire externe (16), et la seconde portion tubulaire externe (11b) comporte un second élément tubulaire externe (25) relié côté tête audit premier élément tubulaire externe (16).

13. Tuyau selon l'une quelconque des revendications 1 à 5, **caractérisé en ce que** ladite première portion tubulaire externe (111a) et ladite seconde portion tubulaire externe (111b) comportent des manchons (133a, 133b) respectifs, chacun étant solidement associé à un premier élément tubulaire externe (116), et respectivement à un second élément tubulaire externe (125), ledit élément d'interposition tubulaire (120) étant interposé entre ledit premier élément tubulaire externe (116) et ledit second élément tubulaire externe (125).

14. Procédé pour fabriquer un tuyau (10 ; 110) pour transférer des matériaux abrasifs, comportant la fabrication d'un corps tubulaire externe (11 ; 111) qui permet de prédisposer au moins une première portion tubulaire externe (11a ; 111a) et une seconde portion tubulaire externe (11b ; 111b) destinées à être réciproquement reliées en correspondance avec des extrémités respectives avec un cordon de soudure (15 ; 115), et la fabrication d'un corps tubulaire interne (12 ; 112) devant être disposé à l'intérieur du corps tubulaire externe (11 ; 111) constitué d'un matériau métallique et ayant une résistance à l'usure qui est supérieure à celui dont est constitué le corps tubulaire externe (11 ; 111), dans lequel la fabrication dudit corps tubulaire interne (12; 112) permet de prédisposer une première portion tubulaire interne (12a ; 112a) devant être insérée dans ladite première portion tubulaire externe (11a ; 111a), et une seconde portion tubulaire interne (12b; 112b) devant être insérée dans ladite seconde portion tubulaire externe (11 b ; 111 b), **caractérisé en ce qu'**avant le raccordement entre ladite première portion tubulaire externe (11 a ; 111 a) et ladite seconde portion tubulaire externe (11b ; 111b), le procédé permet d'insérer un élément d'interposition tubulaire (20 ; 120), constitué d'un matériau résistant à la chaleur et résistant à l'usure, en le disposant entre ladite première portion tubulaire interne (12a; 112a) et ladite seconde portion tubulaire interne (12b ; 112b), en correspondance avec la position dudit cordon de soudure (15 ; 115), ledit élément d'interposition tubulaire (20) étant destiné à s'étendre longitudinalement à califourchon sur le cordon de soudure (15 ; 115) qui relie la première portion tubulaire externe (11a ; 111a) et la seconde portion tubulaire externe (11 b ; 111 b).

15. Procédé selon la revendication 14, **caractérisé en ce qu'**au moins une portion parmi ladite première portion tubaire interne (12a ; 112a) et ladite seconde portion tubulaire interne (12b ; 112b) est soumise à une trempe.
